# EUROPÄISCHE PATENTSCHRIFT

(11) **EP 2 831 379 B1**
(45) Veröffentlichungstag und Bekanntmachung des Hinweises auf die Patenterteilung: **03.05.2017**
(21) Anmeldenummer: 13711444.3
(22) Anmeldetag: 22.03.2013
(51) Int. Cl.: F01D 9/04, F01D 25/24

(54) **TRÄGERRING**
HOLDER RING
ANNEAU DE SUPPORT

(30) Priorität: 26.03.2012 EP 12161155
(43) Veröffentlichungstag der Anmeldung: 04.02.2015
(73) Patentinhaber: General Electric Technology GmbH, 5400 Baden (CH)
(72) Erfinder: RAUCH, Marc, 4402 Frenkendorf (CH); HOENIG, Felix, 4600 Olten (CH)
(74) Vertreter: Bernotti, Andrea
(86) Internationale Anmeldenummer: PCT/EP2013/056168
(87) Internationale Veröffentlichungsnummer: WO 2013/144040

(56) Entgegenhaltungen:
- EP-A1- 2 196 628
- EP-A2- 2 261 467
- EP-B1- 0 620 362

## Beschreibung

### Technisches Gebiet

Die vorliegende Erfindung betrifft einen Trägerring für eine Hochdruck-Gasturbine einer Gasturbinenanlage. Die Erfindung betrifft ausserdem eine mit einem solchen Trägerring ausgestattete Gasturbinenanlage, insbesondere zum Antreiben eines Generators zur Stromerzeugung in einer Kraftwerksanlage.

### Stand der Technik

Eine sequentielle Gasturbinenanlage, wie sie zum Beispiel aus EP 0 620 362 B1 hervorgeht, weist eine Hochdruck-Gasturbine auf, welche durch die Heissgase einer stromauf angeordneten Hochdruck-Brennkammer beaufschlagt wird. Stromauf dieser Hochdruck-Brennkammer stellt ein Verdichter die Bereitstellung der Verdichterluft sicher. Stromab der Hochdruck-Gasturbine ist dann eine Niederdruck-Brennkammer vorgesehen. Die Heissgase dieser Niederdruck-Brennkammer beaufschlagen eine stromab angeordnete Niederdruck-Gasturbine. Eine derartige Gasturbinenanlage wird bevorzugt mit einem gemeinsamen Rotor betrieben, der die Laufschaufeln des Verdichters, der Hochdruck-Gasturbine und der Niederdruck-Gasturbine trägt.

Bei einer derartigen Gasturbinen-Anlage kommt ein Trägerring der eingangs genannten Art im Bereich der Hochdruck-Gasturbine zum Einsatz, um Leitschaufeln und/oder Hitzeschutzschilde der Hochdruck-Gasturbine zu tragen bzw. im Gaspfad zu positionieren. Der Trägerring kann dabei Leitschaufeln der Hochdruck-Gasturbine tragen, welche in Wirkverbindung zu den Laufschaufeln der Hochdruck-Gasturbine stehen. Zusätzlich kann der Trägerring zwischen in der Umfangsrichtung benachbarten Leitschaufeln auch Hitzeschutzschilde tragen. Alternativ kann der Trägerring auch zum Tragen von Hitzeschutzschilden verwendet werden, die radial zu Laufschaufeln der Hochdruck-Gasturbine benachbart sind und axial in derselben Ebene liegen.

Im Rahmen der Montage einer derartigen Gasturbine ist es grundsätzlich möglich, den vormontierten Trägerring axial auf den Rotor aufzuschieben, der bereits mit den Leitschaufeln für den Verdichter und die beiden Gasturbinen bestückt ist. In der richtigen Axialposition kann dann der Trägerring für die weitere Montage mit Hilfe von Halteelementen als Montagehilfe am Rotor fixiert werden. Anschliessend lässt sich der Rotor zusammen mit dem Trägerring in einem Statorgehäuse der Gasturbinenanlage unterbringen. Ferner lässt sich dann anschliessend der Trägerring am Statorgehäuse befestigen.

Dabei werden die Halteelemente, die für die Montage eine Fixierung des Trägerrings am Rotor ermöglicht haben, wieder entfernt. Eine derartige Vorgehensweise ist vergleichsweise aufwändig. Ferner ist die axiale Länge der Laufbeschaufelung des Verdichters bzw. der Niederdruck-Gasturbine durch den freien Durchmesser des Trägerrings begrenzt, um ein Aufschieben des Trägerrings auf den beschaufelten Rotor ermöglichen zu können. Schliesslich gestalten sich Wartungsarbeiten zum Austauschen der Leitschaufeln bzw. der Hitzeschutzschilde des Trägerrings sehr aufwändig, da der gesamte Rotor aus dem Statorgehäuse ausgebaut werden muss, um den Trägerring wieder abziehen zu können. Bei einer derartigen Gasturbinenanlage wird der Trägerring häufig auch als HPT-Ring bezeichnet, wobei HPT für High-Pressure-Turbine steht.

Aus der DE 199 50 108 A1 ist ein Hitzeschutzring bekannt, der in einer Gasturbine radial benachbart zu Laufschaufeln der Gasturbine angeordnet ist. Der bekannte Hitzeschutzring umfasst mehrere Hitzeschildsegmente, die in der Umfangsrichtung hintereinander angeordnet sind und die mit Hilfe von am Statorgehäuse befestigten Klammersegmenten gehalten sind. Die Klammersegmente sind dabei axial beiderseits der Hitzeschildsegmente am Statorgehäuse angeordnet und besitzen an ihren in der Axialrichtung einander zugewandten Innenseiten jeweils eine sich in der Umfangsrichtung erstreckende Nut, in welche die Hitzeschildsegmente randseitig axial eingreifen.

Aus der WO 2010/040339 A1 ist ein Laufschaufelkranz für einen Rotor einer Gasturbine bekannt, der aus einer Vielzahl von in der Umfangsrichtung benachbarten Laufschaufeln besteht. Für die Montage des Laufschaufelkranzes wird ein Montagering bereitgestellt, der in der Umfangsrichtung segmentiert ist, wobei zum Verbinden von in der Umfangsrichtung benachbarten Ringsegmenten geeignete Verbindungsstücke vorgesehen sind. Die Verwendung einer derartigen segmentierten Montagehilfe vereinfacht das Einbringen einer Vorspannung in den Leitschaufelkranz.

EP 2 196 628 A1 befasst sich mit einem Trägerring für eine Gasturbinenanlage, welche Gasturbinenanlage aus mindestens einem Verdichter, mindestens einer stromab des Verdichters betriebenen Brennkammer und mindestens einer stromab der Brennkammer befindlichen und mit Heissgasen aus der Brennkammer beaufschlagten Turbine besteht. Die Laufschaufeln des Verdichters und der Turbine sind auf einer gemeinsamen Rotorwelle angeordnet, wobei ein Trägerring die Leitschaufeln der Turbine trägt und an der Brennkammer befestigt ist, und dass der Trägerring zumindest im Bereich seiner Leitschaufeln in der Umfangsrichtung segmentiert ist und wenigstens zwei Ringsegmente aufweist, welche die Leitschaufeln tragen.

Aus EP 0 620 362 B1 geht eine Gasturbogruppe hervor, welche im Wesentlichen besteht aus mindestens einer Verdichter-Einheit, einer stromab der Verdichter-Einheit wirkenden ersten Brennkammer, einer stromab der ersten Brennkammer wirkenden ersten Turbine, einer stromab der ersten Turbine wirkenden zweiten Brennkammer, einer stromab der zweiten Brennkammer wirkenden zweiten Turbine. Die erste Brennkammer ist eine Ringbrennkammer, und die zweite Brennkammer aus mindestens einem brennerlosen Brennraum besteht, wobei sich dieser Brennraum zwischen der Abströmungsebene der ersten Turbine und der Anströmungsebene der zweiten Turbine erstreckt. Das Verfahren zum Betrieb einer solchen Gasturbogruppe erfolgt, indem die Abgase aus der ersten Turbine ein Temperaturniveau aufweisen, welches oberhalb der Selbstzündungstemperatur des in der zweiten Brennkammer verwendeten Brennstoffes liegt

Aus EP 2261 467 A2 geht eine Innengehäusebaugruppe hervor, welche ein vorderes und ein hinteres Kernsegment umfasst. Das hintere Kernsegment ist mit dem vorderen Kernsegment zusammengebaut und dient dazu, eine Vielzahl von Leitschaufeln beim ihrer rotativen Bewegung abzustützen. Ein Trägerplattensegment steht in Wirkverbindung mit dem genannten hinteren Kernsegment. Ein Befestigungselement, das durch die Ummantelung des Trägerplattensegmentes verläuft, bewerkstelligt die Halterung des hinteren Kernsegmentes mit dem vorderen Kernsegment.

### Darstellung der Erfindung

Die vorliegende Erfindung beschäftigt sich mit dem Problem, für einen Trägerring der eingangs genannten Art bzw. für eine mit einem derartigen Trägerring ausgestattete Gasturbinenanlage eine verbesserte oder zumindest eine andere Ausführungsform anzugeben, die eine vereinfachte Montage der Gasturbinenanlage bzw. eine vereinfachte Wartung der Gasturbinenanlage ermöglicht.

Dieses Problem wird bei der vorliegenden Erfindung insbesondere durch die Merkmale des unabhängigen Anspruchs gelöst. Vorteilhafte aufgabengemässe Ausführungsformen sind Gegenstand der abhängigen Ansprüche.

Die Erfindung beruht auf dem allgemeinen Gedanken, den Trägerring zumindest im Bereich seiner Leitschaufeln bzw. im Bereich seiner Hitzeschutzschilde in der Umfangsrichtung zu segmentieren, derart, dass zumindest zwei Ringsegmente vorhanden sind, die jeweils Leitschaufeln bzw. Hitzeschutzschilde tragen. Durch die Segmentierung des Trägerrings muss der Trägerring nicht mehr axial auf den Rotor aufgeschoben werden. Vielmehr ist es möglich, die einzelnen Ringsegmente an der für den Trägerring bezüglich des Rotors vorgesehenen axialen Position zum Trägerring interdependent zusammenzubauen.

Somit entfällt das aufwändige und komplizierte Auffädeln des Trägerrings auf den mit seinen Laufschaufeln bestückten Rotor. Darüber hinaus ist die Dimensionierung der Laufschaufeln des Rotors nicht mehr vom freien Innenquerschnitt des Trägerrings abhängig. Somit können insbesondere die Aussendurchmesser einer ersten Laufschaufelreihe des Verdichters und/oder einer letzten Laufschaufelreihe der Niederdruck-Gasturbine grösser sein als der freie Innendurchmesser des Trägerrings.

Darüber hinaus vereinfacht sich auch die Wartung der Gasturbinenanlage im Bereich des Trägerrings, beispielsweise um die Leitschaufeln bzw. Hitzeschutzschilde des Trägerrings auszutauschen bzw. zu untersuchen.

Um den Trägerring auszubauen, ist es möglich, diesen wieder zurück zu segmentieren, ohne dass der gesamte Rotor aus dem Statorgehäuse ausgebaut werden muss. Die Umfangsrichtung des Trägerrings bezieht sich im Einbauzustand des Trägerrings auf die Rotationsachse des Rotors der Gasturbinenanlage.

Entsprechend einer besonders vorteilhaften Ausführungsform kann der Trägerring ausserdem in der Axialrichtung geteilt sein und einen in der Umfangsrichtung segmentierten, die Leitschaufeln und/oder die Hitzeschutzschilde tragenden Haupt-Teilring sowie wenigstens einen in der Umfangsrichtung segmentieren Seiten-Teilring aufweisen. Bevorzugt ist dabei eine Variante, bei welcher ausschliesslich der Haupt-Teilring mit den Leitschaufeln bzw. mit den Hitzeschutzschilden ausgestattet ist, so dass also der jeweilige Seiten-Teilring weder Leitschaufeln noch Hitzeschutzschilde trägt. Mit Hilfe des jeweiligen Seiten-Teilrings ist es insbesondere möglich, den Haupt-Teilring zu stabilisieren. Vorzugsweise können die Segmente des Seitenteilrings dazu verwendet werden, die Segmente des Haupt-Teilrings miteinander zu verbinden. Die Axialrichtung erstreckt sich dabei im Einbauzustand des Trägerrings parallel zur Rotationsachse des Rotors der Gasturbinenanlage.

Bei einer anderen vorteilhaften Ausführungsform kann der Trägerring genau zwei segmentierte Seiten-Teilringe aufweisen, die beiderseits des Haupt-Teilrings angeordnet sind. Hierdurch lässt sich der Haupt-Teilring besonders effizient ausstreifen.

Bevorzugt ist dabei eine Weiterbildung, bei welcher die beiden Seiten-Teilringe identisch sind. Die Gestaltung der Seiten-Teilringe als Gleichteile reduziert die Herstellungskosten. Ausserdem können dadurch während der Montage Verwechslungen vermieden werden.

Die Haupt-Teilringsegmente können als Gleichteile konzipiert sein. Zusätzlich oder alternativ können die Seiten-Teilringsegmente als Gleichteile konzipiert sein.

Besonders vorteilhaft ist eine Ausführungsform, bei welcher die Ringsegmente des Haupt-Teilrings gegenüber den Ringsegmenten des jeweiligen Seiten-Teilrings in der Umfangsrichtung versetzt angeordnet sind. Somit überlappen sich die Haupt-Teilringsegmente und die Seiten-Teilringsegmente in der Umfangsrichtung, wodurch der gebaute Trägerring eine erhöhte Stabilität besitzt. Bevorzugt ist dabei eine Weiterbildung, bei welcher die Ringsegmente des Haupt-Teilrings gegenüber den Ringsegmenten des jeweiligen Seiten-Teilrings um etwa 50% ihrer Umfangslänge in der Umfangsrichtung versetzt angeordnet sind. Auf diese Weise ist jedes Seiten-Teilringsegment im Wesentlichen hälftig je zwei benachbarten Haupt-Teilringsegmenten zugeordnet.

Bei einer anderen vorteilhaften Ausführungsform kann eine axiale Wandstärke des Haupt-Teilrings mindestens 50% grösser sein als eine axiale Wandstärke des jeweiligen Seiten-Teilrings. Auf diese Weise kann der Haupt-Teilring besser für seine Tragfunktion hinsichtlich der Leitschaufeln bzw. der Hitzeschutzschilde genutzt werden. Gleichzeitig führt die reduzierte axiale Wandstärke des jeweiligen Seiten-Teilrings zu einer in der Axialrichtung kompakten Bauweise des hier vorgestellten gebauten Trägerrings.

Von besonderem Vorteil ist eine Ausführungsform, bei welcher der jeweilige Seiten-Teilring genau vier Ringsegmente aufweist. Bevorzugt ist auch für den Haupt-Teilring eine Ausführung mit genau vier Ringsegmenten. Zweckmässig sind dabei die einzelnen Ringsegmente bezüglich ihrer Bogenlänge in der Umfangsrichtung im Wesentlichen gleich gross dimensioniert. Bei vier Ringsegmenten erstreckt sich somit das jeweilige einzelne Ringsegment jeweils um etwa 90°. Es hat sich gezeigt, dass derartige 90°-Ringsegmente vergleichsweise einfach handhabbar sind und im zusammengebauten Zustand die gewünschte Stabilität für den Trägerring gewährleisten.

Es ist klar, dass grundsätzlich auch eine andere Teilung des Haupt-Teilrings bzw. des jeweiligen Seiten-Teilrings denkbar ist. Beispielsweise kann auch eine Teilung in genau zwei oder in genau drei oder in genau fünf Ringsegmente realisiert werden. Bevorzugt ist eine Ausführungsform, bei welcher die Teilung des Haupt-Teilrings gleich ist wie die Teilung des jeweiligen Seiten-Teilrings. Grundsätzlich ist jedoch auch eine andere bzw. eine unterschiedliche Teilung von Haupt-Teilring und Seiten-Teilring denkbar.

Besonders vorteilhaft ist eine Ausführungsform, bei welcher der Haupt-Teilring mit dem jeweiligen Seiten-Teilring verschraubt ist. Derartige Verschraubungen ermöglichen effiziente, hochfeste lösbare Verbindungen zwischen dem Haupt-Teilring und dem jeweiligen Seiten-Teilring. Bevorzugt ist dabei eine Weiterbildung, bei welcher sich die jeweilige Verschraubung axial erstreckt. Auf diese Weise werden der Haupt-Teilring und der jeweilige Seiten-Teilring axial miteinander verspannt, wodurch die gewünschte Steifigkeit im zusammengebauten Trägerring realisierbar ist. Sofern beiderseits des Haupt-Teilrings zwei Seiten-Teilringe vorgesehen sind, erstreckt sich die jeweilige Verschraubung durch den Haupt-Teilring hindurch. Sofern Verschraubungen realisiert werden, kann sich ein Schraubenkopf an dem einen Seiten-Teilring axial abstützen. Am anderen Seiten-Teilring kann eine Gewindeöffnung für die jeweilige Schraube vorgesehen sein. Ebenso ist es möglich, die jeweilige Schraube am anderen Seiten-Teilring über eine Mutter, ggf. mit Unterlegscheibe, abzustützen.

Eine erfindungsgemässe Gasturbinenanlage umfasst somit einen Verdichter, eine dem Verdichter nachgeordnete Hochdruck-Brennkammer, eine der Hochdruck-Brennkammer nachgeordnete Hochdruck-Gasturbine, eine der Hochdruck-Gasturbine nachgeordnete Niederdruck-Brennkammer und eine der Niederdruck-Brennkammer nachgeordnete Niederdruck-Gasturbine. Die erfindungsgemässe Gasturbinenanlage charakterisiert sich durch einen Trägerring der vorstehend beschriebenen Art, der an der Hochdruck-Brennkammer befestigt ist und der Leitschaufeln und/oder Hitzeschutzschilde für die Hochdruck-Gasturbine trägt.

Grundsätzlich beschränkt sich der Einsatz des erfindungsgemässen Trägerringes nicht allein auf sequentiell betriebene Gasturbinenanlagen, auch Gasturbogruppen genannt, sondern es sind auch andere Gasturbokonzepte möglich, welche beispielsweise aus einem Verdichter, einer Brennkammer und einer Turbine bestehen, und von den Vorteilen des beschriebenen erfindungsgemässen Trägerringes profitieren können.

Die hier weitgehend vorgenommene Fokussierung auf sequentiell befeuerten Gasturbinenanlage hat allein den Zweck, die durch den Einsatz des erfindungsgemässen Trägerringes vorteilhaft gelöste Problematik besonders augenfällig zu offenbaren.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen. Alle für das unmittelbare Verständnis der Erfindung nicht wesentlichen Merkmale sind weggelassen worden.

Es zeigen, jeweils schematisch,
- Fig. 1: eine stark vereinfachte, schaltplanartige Prinzipdarstellung einer Gasturbinenanlage,
- Fig. 2: eine vereinfachte Seitenansicht der Gasturbinenanlage beim Montieren eines Rotors in einem Statorgehäuse,
- Fig. 3: eine Axialansicht eines Trägerrings,
- Fig. 4: eine auseinander gezogene isometrische Darstellung des Trägerrings.

### Wege zur Ausführung der Erfindung

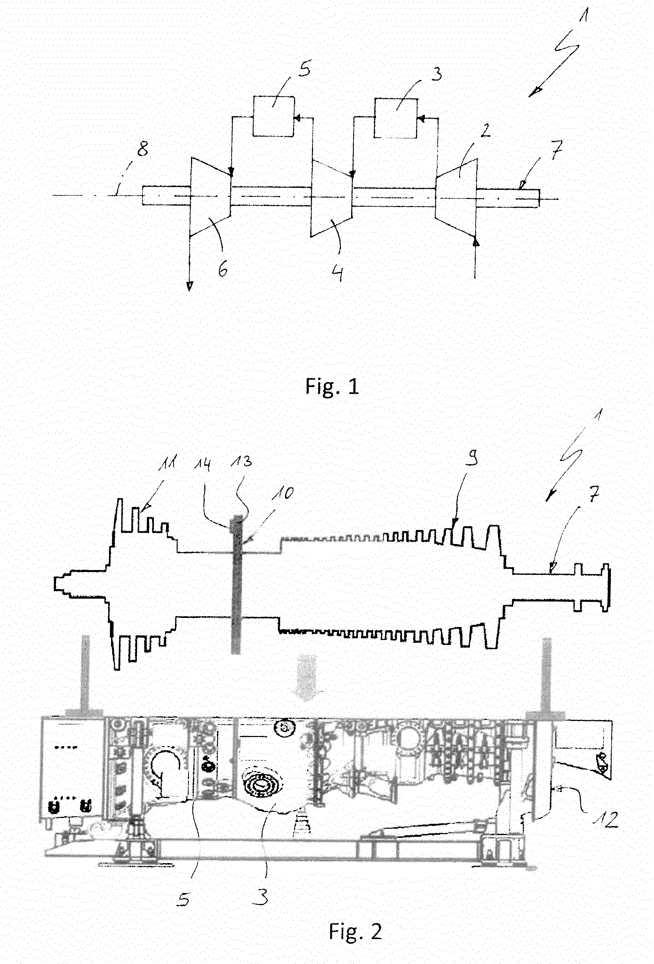

Entsprechend Fig. 1 umfasst eine Gasturbinenanlage 1, die bevorzugt zum Antreiben eines hier nicht gezeigten Generators zur Stromerzeugung in einer Kraftwerksanlage verwendet werden kann, einen Verdichter 2, eine dem Verdichter 2 nachgeordnete Hochdruck-Brennkammer 3, eine der Hochdruck-Brennkammer 3 nachgeordnete Hochdruck-Gasturbine 4, eine der Hochdruck-Gasturbine 4 nachgeordnete Niederdruck-Brennkammer 5 und eine der Niederdruck-Brennkammer 5 nachgeordnete Niederdruck-Gasturbine 6. Die Führung des Arbeitsgases durch die Gasturbinenanlage 1 ist in Fig. 1 durch Pfeile angedeutet. Die Gasturbinenanlage 1 besitzt für den Verdichter 2 und die beiden Gasturbinen 4, 6 zweckmässig einen gemeinsamen Rotor 7, der im Betrieb der Gasturbinenanlage 1 um eine Rotationsachse 8 rotiert.

Gemäss Fig. 2 trägt der Rotor 7 eine Laufbeschaufelung 9 des Verdichters 2, die im Beispiel aus mehreren Laufschaufelreihen 9 gebildet ist, die in der Axialrichtung, die sich parallel zur Rotationsachse 8 erstreckt, aufeinander folgen. Innerhalb der jeweiligen Laufschaufelreihe 9 sind dabei in der Umfangsrichtung, die sich auf die Rotationsachse 8 bezieht, mehrere einzelne Laufschaufeln 9 angeordnet. Der Rotor 7 trägt ausserdem eine Laufbeschaufelung 10 der Hochdruck-Gasturbine 4, die zumindest eine Laufschaufelreihe 10 besitzt, die mehrere in der Umfangsrichtung benachbarte einzelne Laufschaufeln 10 umfasst. Schliesslich trägt der Rotor 7 ausserdem eine Laufbeschaufelung 11 der Niederdruck-Gasturbine 6, die im Beispiel mehrere Laufschaufelreihen 11 umfasst, die in der Axialrichtung nebeneinander angeordnet sind und die jeweils in der Umfangsrichtung benachbarte einzelne Laufschaufeln 11 umfassen.

Gemäss Fig. 2 umfasst die Gasturbinenanlage 1 ausserdem ein Statorgehäuse 12, von dem in Fig. 2 nur eine untere Hälfte dargestellt ist und das zur Aufnahme und Lagerung des Rotors 7 dient. Ein nach unten orientierter Pfeil deutet das Absenken des Rotors 7 in das Statorgehäuse 12 während der Montage an. Am Gehäuse 12 sind auch die Hochdruck-Brennkammer 3 und die Niederdruck-Brennkammer 5 ausgebildet.

Die Gasturbinenanlage 1 ist des Weiteren mit einem Trägerring 13 ausgestattet, der statorseitig angeordnet und der Hochdruck-Gasturbine 4 zugeordnet ist. Im Beispiel der Fig. 2 ist der Trägerring 13 bereits am Rotor 7 positioniert und zwar im Bereich der Laufbeschaufelung 10 der Hochdruck-Gasturbine 4. Die nur für die Montage des Rotors 7 im Statorgehäuse 12 benötigte Lagefixierung zwischen Trägerring 13 und Rotor 7 wird im Beispiel der Fig. 2 mit Hilfe einer Montagehilfe 14 realisiert. Im fertig montierten Zustand wird der Trägerring 13 dann am Statorgehäuse 12 vorzugsweise an der Hochdruck-Brennkammer 3 montiert, also befestigt. Die Montagehilfe 14 kann dann wieder entfernt werden.

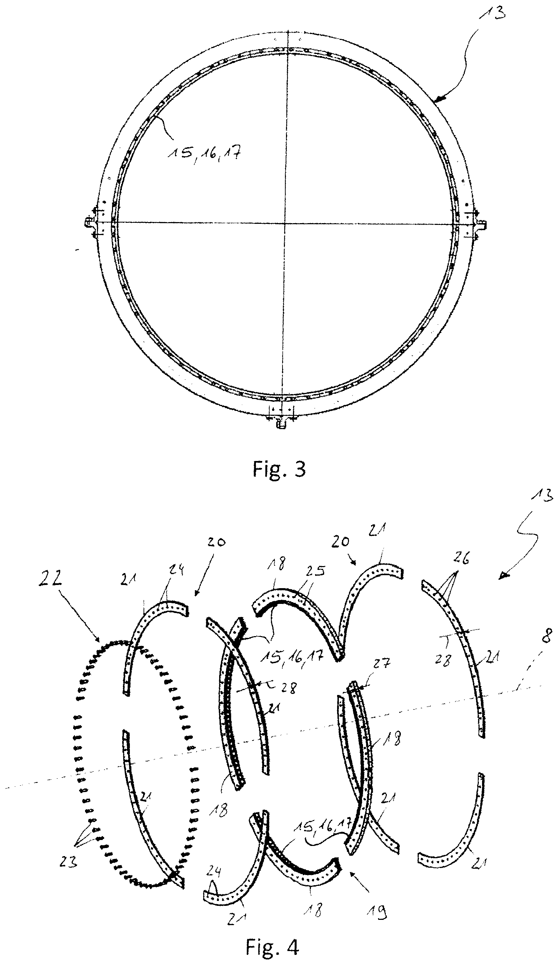

Mit Bezug auf die Fig. 3 und 4 wird im Folgenden näher auf den Trägerring 13 eingegangen. Der Trägerring 13 trägt an seinem Innenumfang statorseitige Komponenten 15 der Hochdruck-Gasturbine 4. Hierbei kann es sich um Leitschaufeln 16 oder um Hitzeschutzschilde 17 handeln. Ebenso kann es sich bei den Komponenten 15 sowohl um Leitschaufeln 16 als auch um Hitzeschutzschilde 17 handeln.

Gemäss Fig. 4 ist der Trägerring 13 zumindest im Bereich der Leitschaufeln 16 bzw. Hitzeschutzschilde 17 in der Umfangsrichtung segmentiert, so dass er zumindest zwei Ringsegmente 18 aufweist, welche die Leitschaufeln 16 bzw. die Hitzeschutzschilde 17 tragen. Im Beispiel sind genau vier derartige Ringsegmente 18 vorgesehen. Ferner ist der Trägerring 13 im bevorzugten Beispiel der Fig. 4 ausserdem in der Axialrichtung geteilt, derart, dass er einen in der Umfangsrichtung segmentierten Haupt-Teilring 19 und zumindest einen ebenfalls in der Umfangsrichtung segmentierten Seiten-Teilring 20 aufweist. Der Haupt-Teilring 19 trägt die Leitschaufeln 16 bzw. die Hitzeschutzschilde 17 und umfasst somit die zuvor genannten Segmente 18, die im Folgenden auch als Haupt-Teilringsegmente 18 bezeichnet werden. Im Beispiel der Fig. 4 sind zwei Seiten-Teilringe 20 vorgesehen, deren Segmente im Folgenden mit 21 bezeichnet werden. Die Seiten-Teilringe 20 dienen zur Befestigung der Haupt-Teilringsegmente 18 aneinander, um im zusammengebauten Zustand den in sich stabilen Trägerring 13 zu bilden. Somit tragen die Seiten-Teilringe 20 weder Leitschaufeln 16 noch Hitzeschutzschilde 17. Die beiden Seiten-Teilringe 20 sind bezüglich der Axialrichtung, die im Einbauzustand des Trägerrings 13 mit der Rotationsachse 8 des Rotors 7 zusammenfällt, beiderseits des Haupt-Teilrings 19 angeordnet. Auch die Seiten-Teilringe 20 besitzen im gezeigten Beispiel jeweils genau vier Seiten-Teilringsegmente 21. Die Segmentierung des Haupt-Teilrings 19 sowie die Segmentierung der Seiten-Teilringe 20 ist hier symmetrisch realisiert, so dass die einzelnen Segmente 18, 21 sich in der Umfangsrichtung jeweils über etwa 90° erstrecken.

Wie in Fig. 4 angedeutet, sind die Ringsegmente 18 des Haupt-Teilrings 19 gegenüber den Ringsegmenten 21 der beiden Seiten-Teilringe 20 in der Umfangsrichtung versetzt angeordnet, und zwar vorzugsweise um etwa 50% ihrer jeweiligen Umfangslänge. Mit anderen Worten, die hier gezeigten 90°-Haupt-Teilringsegmente 18 sind in der Umfangsrichtung um etwa 45°gegenüber den 90°-Seiten-Teilringsegmenten 21 versetzt angeordnet. Die Seiten-Teilringe 20 bzw. deren Segmente 21 liegen axial unmittelbar am Haupt-Teilring 19 bzw. an dessen Segmenten 18 an. Mit 22 ist eine Verschraubung angedeutet, die eine Vielzahl einzelner Schrauben 23 umfasst, die jeweils axial ausgerichtet sind und die in der Umfangsrichtung nebeneinander angeordnet sind. Die einzelnen Schrauben 23 durchdringen den einen Seiten-Teilring 20 in entsprechenden Durchgangsöffnungen 24 sowie den Haupt-Teilring 19 in entsprechenden Durchgangsöffnungen 25. Auch der andere Seiten-Teilring 20 besitzt eine entsprechende Anzahl von Öffnungen 26. Je nach Ausgestaltungsform der Verschraubung 22 bilden die Öffnungen 26 des anderen Seiten-Teilrings 20 Gewindeöffnungen 26, in welche die Schrauben 23 eingeschraubt sind, oder ebenfalls Durchgangsöffnungen 26, die von den Schrauben 23 durchsetzt sind, wobei dann die Schrauben 23 an einer vom Haupt-Teilring 19 abgewandten Aussenseite des anderen Seiten-Teilrings 20 mit entsprechenden Muttern (hier nicht gezeigt) verschraubt sein können.

Zweckmässig sind die beiden Seiten-Teilringe 20 jedoch identisch konfiguriert. Durch die 90°-Segmentierung der Teilringe 19, 20 lassen sich auch die zugehörigen Ringsegmente 18, 21 jeweils identisch konzipieren. Vorzugsweise sind somit die Haupt-Teilringsegmente 18 Gleichteile. Zusätzlich oder alternativ sind die Seiten-Teilringsegmente 21 ebenfalls Gleichteile.

Bei dem in Fig. 4 gezeigten Beispiel besitzt der Haupt-Teilring 19 bzw. besitzen die zugehörigen Segmente 18 jeweils eine axiale Wandstärke 27, die grösser ist als eine axiale Wandstärke 28 der beiden Seiten-Teilringe 20 bzw. der zugehörigen Segmente 21. Vorzugsweise ist die Wandstärke 27 des Haupt-Teilrings 19 mindestens 50% grösser als die axiale Wandstärke 28 des jeweiligen Seiten-Teilrings 20. Insbesondere kann der Haupt-Teilring 29 hinsichtlich seiner Wandstärke 27 etwa doppelt so gross dimensioniert sein wie die Seiten-Teilringe 20.

Der hier vorgestellte segmentierte Trägerring 13 lässt sich abweichend von der Darstellung der Fig. 2 auch nachträglich, also bei in das Statorgehäuse 12 bereits eingesetztem Rotor 7, um den Rotor 7 herum in das Statorgehäuse 12 einbauen. Ebenso lässt sich der Trägerring 13 ausbauen, ohne dass hierzu der Rotor 7 aus dem Statorgehäuse 12 ausgebaut werden muss.

### Bezugszeichenliste

- 1: Gasturbinenanlage
- 2: Verdichter
- 3: Hochdruck-Brennkammer, erste Brennkammer
- 4: Hochdruck-Gasturbine, erste Turbine
- 5: Niederdruck-Brennkammer, zweite Brennkammer
- 6: Niederdruck-Gasturbine, zweite Turbine
- 7: Rotor
- 8: Rotationsachse
- 9: Laufschaufeln von 2
- 10: Laufschaufeln von 4
- 11: Laufschaufeln von 6
- 12: Statorgehäuse
- 13: Trägerring
- 14: Montagehilfe
- 15: Komponente
- 16: Leitschaufel
- 17: Hitzeschutzschild
- 18: Segment von 19
- 19: Haupt-Teilring
- 20: Seiten-Teilring
- 21: Segment von 20
- 22: Verschraubung
- 23: Schraube
- 24: Öffnung
- 25: Öffnung
- 26: Öffnung
- 27: Wandstärke von 19
- 28: Wandstärke von 20

## Patentansprüche

1. Trägerring für eine Gasturbinenanlage (1), welche Gasturbinenanlage aus mindestens einem Verdichter, mindestens einer stromab des Verdichters betriebenen Brennkammer und mindestens einer stromab der Brennkammer befindlichen und mit Heissgasen aus der Brennkammer beaufschlagten Turbine besteht, wobei die Laufschaufeln des Verdichters und der Turbine auf einer gemeinsamen Rotorwelle angeordnet sind, wobei ein Trägerring (13) die Leitschaufeln (16) und/oder Hitzeschutzschilde (17) der Turbine (4) trägt und an der Brennkammer (3) befestigbar ist, wobei der Trägerring (13) zumindest im Bereich seiner Leitschaufeln (16) und/oder seiner Hitzeschutzschilde (17) in der Umfangsrichtung segmentiert ist und wenigstens zwei Ringsegmente (18) aufweist, **dadurch gekennzeichnet, dass** der Trägerring (13) ausserdem in der Axialrichtung geteilt ist und einen in der Umfangsrichtung segmentierten, die Leitschaufeln (16) und/oder die Hitzeschutzschilde (17) tragenden Haupt-Teilring (19) sowie wenigstens einen in der Umfangsrichtung segmentierten Seiten-Teilring (20) aufweist.

2. Trägerring nach Anspruch 1, **dadurch gekennzeichnet, dass** die Gasturbinenanlage im Wesentlichen aus einer aus mindestens einem Verdichter bestehenden Verdichtereinheit, aus einer stromab der Verdichtereinheit wirkenden ersten Brennkammer, aus einer stromab der ersten Brennkammer wirkenden ersten Turbine, aus einer stromab der ersten Turbine wirkenden zweiten Brennkammer, aus einer stromab der zweiten Brennkammer wirkenden zweiten Turbine besteht, und der Trägerring (13) die Leitschaufeln (16) und/oder Hitzeschutzschilde (17) mindestens der ersten Turbine (4) trägt und mindestens an der ersten Brennkammer (3) befestigt ist.

3. Trägerring nach Anspruch 1, **dadurch gekennzeichnet, dass** der Trägerring (13) zwei segmentierte Seiten-Teilringe (20) aufweist, die beiderseits des Haupt-Teilrings (19) angeordnet sind.

4. Trägerring nach Anspruch 3, **dadurch gekennzeichnet, dass** die beiden Seiten-Teilringe (20) identisch sind.

5. Trägerring nach einem der Ansprüche 1 bis 4, **dadurch gekennzeichnet, dass** die Ringsegmente (18) des Haupt-Teilrings (19) gegenüber den Ringsegmenten (21) des jeweiligen Seiten-Teilrings (20) in der Umfangsrichtung versetzt angeordnet sind.

6. Trägerring nach einem der Ansprüche 1 bis 5, **dadurch gekennzeichnet, dass** eine axiale Wandstärke (27) des Haupt-Teilrings (19) mindestens 50% grösser ist als eine axiale Wandstärke (28) des jeweiligen Seiten-Teilrings (20).

7. Trägerring nach einem der Ansprüche 1 bis 6, **dadurch gekennzeichnet, dass** der jeweilige Seiten-Teilring (20) genau vier Ringsegmente (21) aufweist, und/oder dass der jeweilige Seiten-Teilring (20) symmetrisch segmentiert ist.

8. Trägerring nach einem der Ansprüche 1 bis 7, **dadurch gekennzeichnet, dass** der Haupt-Teilring (19) genau vier Ringsegmente (18) aufweist, und/oder dass der Haupt-Teilring (19) symmetrisch segmentiert ist.

9. Trägerring nach einem der Ansprüche 1 bis 8, **dadurch gekennzeichnet, dass** der Haupt-Teilring (19) mit dem jeweiligen Seiten-Teilring (20) verschraubt ist.

10. Gasturbinenanlage, insbesondere zum Antreiben eines Generators zur Stromerzeugung in einer Kraftwerksanlage,
mit mindestens einem Verdichter (2),
mit einer dem Verdichter (2) nachgeordneten ersten Brennkammer (3),
mit einer der ersten Brennkammer (3) nachgeordneten ersten Turbine (4),
mit einer der ersten Turbine (4) nachgeordneten zweiten Brennkammer (5), mit einer der zweiten Brennkammer (5) nachgeordneten zweiten Turbine (6), wobei mindestens die erste Turbine (4) einen Trägerring (13) nach einem der Ansprüche 1 bis 10 aufweist, der mindestens an der ersten Brennkammer (3) befestigt ist.

## Claims

1. Holder ring for a gas turbine plant (1), which gas turbine plant consists of at least one compressor, at least one combustion chamber operated downstream of the compressor, and at least one turbine situated downstream of the combustion chamber and loaded with hot gases from the combustion chamber, wherein the rotor blades of the compressor and the turbine are arranged on a common rotor shaft, wherein a holder ring (13) carries the guide vanes (16) and/or heat shields (17) of the turbine (4) and can be attached to the combustion chamber (3), wherein the holder ring (13) is segmented in the circumferential direction at least in the region of its guide vanes (16) and/or its heat shields (17) and has at least two ring segments (18), **characterised in that** the holder ring (13) is also divided in the axial direction and has a main part ring (19) segmented in the circumferential direction and carrying the guide vanes (16) and/or heat shields (17), and at least one side part ring (20) segmented in the circumferential direction.

2. Holder ring according to claim 1, **characterised in that** the gas turbine plant substantially comprises a compressor unit consisting of at least one compressor, a first combustion chamber acting downstream of the compressor unit, a first turbine acting downstream of the first compression chamber, a second combustion chamber acting downstream of the first turbine, a second turbine acting downstream of the second combustion chamber, and the holder ring (13) carries the guide vanes (16) and/or heat shields (17) of at least the first turbine (4) and is attached at least to the first combustion chamber (3).

3. Holder ring according to claim 1, **characterised in that** the holder ring (13) has two segmented side part rings (20) which are arranged on either side of the main part ring (19).

4. Holder ring according to claim 3, **characterised in that** the two side part rings (20) are identical.

5. Holder ring according to any of claims 1 to 4, **characterised in that** the ring segments (18) of the main part ring (19) are arranged offset to the ring segments (21) of the respective side part ring (20) in the circumferential direction.

6. Holder ring according to any of claims 1 to 5, **characterised in that** an axial wall thickness (27) of the main part ring (19) is at least 50% greater than an axial wall thickness (28) of the respective side part ring (20).

7. Holder ring according to any of claims 1 to 6, **characterised in that** the respective side part ring (20) has precisely four ring segments (21) and/or the respective side part ring (20) is segmented symmetrically.

8. Holder ring according to any of claims 1 to 7, **characterised in that** the main part ring (19) has precisely four ring segments (18) and/or the main part ring (19) is segmented symmetrically.

9. Holder ring according to any of claims 1 to 8, **characterised in that** the main part ring (19) is bolted to the respective side part ring (20).

10. Gas turbine plant, in particular for driving a generator to generate electricity in a power station,
with at least one compressor (2),
with a first combustion chamber (3) arranged downstream of the compressor (2),
with a first turbine (4) arranged downstream of the first combustion chamber (3),
with a second combustion chamber (5) arranged downstream of the first turbine (4),
with a second turbine (6) arranged downstream of the second combustion chamber (5),
wherein at least the first turbine (4) has a holder ring (13) according to any of claims 1 to 10 which is attached at least to the first combustion chamber (3).

## Revendications

1. Bague de support pour une installation à turbine à gaz (1), cette installation à turbine à gaz étant constituée d'au moins un compresseur, d'au moins une chambre de combustion disposée en aval du compresseur et d'au moins une turbine se trouvant en aval de la chambre de combustion et alimentée en gaz chauds provenant de la chambre de combustion, les aubes du compresseur et de la turbine étant disposées sur un arbre de rotor commun, une bague de support (13) portant les aubes directrices (16) et/ou les boucliers thermiques (17) de la turbine (4) et pouvant être fixés à la chambre de combustion (3), la bague de support (13) étant segmentée, au moins au niveau de ses aubes directrices (16) et/ou de ses boucliers thermiques (17) dans la direction circonférentielle, et comprend au moins deux segments annulaires (18), **caractérisée en ce que** la bague de support (13) est en outre divisée dans la direction axiale et comprend une bague partielle principale (19) segmentée dans la direction circonférentielle portant les aubes directrices (16) et/ou les boucliers thermiques (17) ainsi qu'au moins une bague partielle latérale (20) segmentée dans la direction circonférentielle.

2. Bague de support selon la revendication 1, **caractérisée en ce que** l'installation à turbine à gaz est constituée globalement d'une unité de compresseur constituée d'au moins un compresseur, d'une première chambre de combustion agissant en aval de l'unité de compresseur, d'une première turbine agissant en aval de la première chambre de combustion, d'une deuxième chambre de combustion agissant en aval de la première turbine, d'une deuxième turbine agissant en aval de la deuxième chambre de combustion, et la bague de support (13) portant les aubes directrices (16) et/ou les boucliers thermiques (17) d'au moins la première turbine (4) et étant fixé au moins à la première chambre de combustion (3).

3. Bague de support selon la revendication 1, **caractérisée en ce que** la bague de support (13) comprend deux bagues partielles latérales (20) qui sont disposées des deux côtés de la bague partielle principale (19).

4. Bague de support selon la revendication 3, **caractérisée en ce que** les deux bagues partielles latérales (20) sont identiques.

5. Bague de support selon l'une des revendications 1 à 4, **caractérisée en ce que** les segments annulaires (18) de la bague partielle principale (19) sont disposés de manière décalée dans la direction circonférentielle par rapport aux segments annulaires (21) de la bague partielle latérale (20) correspondante.

6. Bague de support selon l'une des revendications 1 à 5, **caractérisée en ce qu'**une épaisseur de paroi axiale (27) de la bague partielle principale (19) est au moins 50 % supérieure à l'épaisseur de paroi axiale (28) de la bague partielle latérale (20) correspondante.

7. Bague de support selon l'une des revendications 1 à 6, **caractérisée en ce que** la bague partielle latérale (20) comprend exactement quatre segments annulaires (21) et/ou **en ce que** la bague partielle latérale (20) est segmentée de manière symétrique.

8. Bague de support selon l'une des revendications 1 à 7, **caractérisée en ce que** la bague partielle principale (19) comprend exactement quatre segments annulaires (18) et/ou **en ce que** la bague partielle principale (19) est segmentée de manière symétrique.

9. Bague de support selon l'une des revendications 1 à 8, **caractérisée en ce que** la bague partielle principale (19) est vissée avec la bague partielle latérale (20) correspondante.

10. Installation à turbine à gaz, plus particulièrement pour l'entraînement d'un générateur destiné à produire du courant dans une centrale énergétique,
avec au moins un compresseur (2),
avec une première chambre de combustion (3) disposée en aval du compresseur (2),
avec une première turbine (4) disposée en aval de la première chambre de combustion (3),
avec une deuxième chambre de combustion (5) disposée en aval de la première turbine (4),
avec une deuxième turbine (6) disposée en aval de la deuxième chambre de combustion (5),
au moins la première turbine (4) comprenant une bague de support (13) selon l'une des revendications 1 à 10, qui est fixée au moins à la première chambre de combustion (3).
